# EUROPEAN PATENT APPLICATION

(11) **EP 2 290 799 A1**
(43) Date of publication of application: **02.03.2011**
(21) Application number: 09010845.7
(22) Date of filing: 25.08.2009
(51) Int. Cl.: H02M 7/48, H02M 7/797

(54) **Bi-directional multilevel AC-DC converter arrangements**

(71) Applicant: Converteam Technology Ltd, Rugby Warwickshire CV21 1BU (GB)
(72) Inventor: Zhan, Changjiang, Rugby, Warwickshire CV21 3UH (GB)
(74) Representative: Thacker, Darran Ainsley

(57) **Abstract**

The present invention relates to a converter arrangement that includes at least one converter phase module (2a). The converter phase module (2a) is used to connect an ac line (AC1) of an ac network to transmission lines (DC1,DC2) that can be used for high-voltage direct current (HVDC) power transmission. The converter phase module (2a) includes a series of interconnected converter section module (4₁,4₂...4ₙ). Each converter section module includes a DC/DC converter unit (6) and a DC/AC converter unit (8) connected to the DC/AC converter unit by a dc link (10). The AC/DC converters (8₁,8₂...8ₙ) of the converter section modules are interconnected in series and operate is a cascade mode. The DC/DC converters (6₁,6₂...6ₙ) of the converter section modules can be interconnected in series or parallel.

## Description

### Technical Field

The present invention relates to converter arrangements, and in particular to those that are suitable for use with high-voltage direct current (HVDC) power transmission.

### Background Art

High-voltage direct current (HVDC) power transmission is well known. A typical configuration has two converter stations that are linked by dc transmission lines. Each converter station employs an AC/DC converter to connect the dc transmission lines to an ac network or power grid.

Known HVDC power transmission systems use LCC converters (typically 12-pulse) to connect the dc transmission lines to the ac network. Such LCC converters produce significant characteristic harmonic currents and absorb reactive power when operating as both an inverter and as a rectifier. The LCC converters therefore need ac filters to suppress the harmonic currents and provide reactive power balance. A converter transformer is also normally required to provide galvanic isolation.

Alternative HVDC power transmission systems use VSC converters. Examples of commercially available systems using VSC converters include the HVDC LIGHT system that is supplied by ABB Ltd of Zurich, Switzerland and which uses a two- or three-level converter topology and the HVDC PLUS system that is supplied by Siemens AG of Berlin, Germany and which uses a modular multi-layer converter (MMC) topology. These HVDC systems use power semiconductor devices (typically IGBTs) that are controlled according to a pulse width modulated (PWM) strategy. The VSC converters still produce harmonic currents but they are shifted to higher frequency bands to reduce the rating of the ac filters. However, high switching losses for high power applications means that the switching frequency of the VSC converters is limited.

Both of the known types of HVDC power transmission system therefore require the use of physically large and costly ac filters. They also require a converter or interface transformer between the ac network and the converter to provide galvanic isolation. The physical size of both components can be a significant disadvantage in situations where there are practical restrictions on the size of a converter station. A typical example would be if an HVDC power transmission system is to be used for offshore renewable energy applications where power generated by an offshore wind turbine farm is transmitted back to shore using HVDC transmission lines. In this case it would be preferable for the offshore converter station to be as small as possible.

### Summary of the invention

The present invention aims to address the problems mentioned above and is directed to a converter arrangement comprising one or more converter phase modules each having a modular topology.

More particularly, the present invention provides a converter phase module for connecting an ac line of an ac network to a first dc line, the converter phase module comprising a series of interconnected converter section modules, each converter section module including a DC/DC converter unit and a DC/AC converter unit connected to the DC/DC converter unit by a dc link; wherein a first converter section module in the series has a first ac terminal connectable to the ac line, a second ac terminal that is connected to a first ac terminal of the next converter section module in the series, and a first dc terminal connectable to the first dc line.

The dc line can be a dc transmission line or cable for high-voltage direct current (HVDC) power transmission or a dc busbar, for example. The converter arrangement may be used for a variety of different purposes including electric power distribution systems, marine power distribution and propulsion systems and the transmission of power generated by renewal energy devices such as wind turbines, for example.

The converter phase module may be used for monopole applications. In this case, only a single dc line will be provided and a second dc terminal of the last converter section module in the series can be connected to an earth electrode or a return conductor, for example. For bipole applications a second dc line will be used. The first dc line will be of positive polarity and the second dc line will be of the same negative polarity.

Each converter section module apart from the last converter section module in the series can have a second dc terminal that is connected to a first dc terminal of the next converter section module in the series. In other words, the DC/DC converter units of the converter section modules are interconnected in series. The last converter section module in the series can have a second dc terminal that is connectable to a second dc line.

The DC/DC converter units of the converter section modules may also be interconnected in parallel. In this arrangement each converter section module can have a first dc voltage terminal that is connectable to the first dc line and a second dc voltage terminal that is connectable to a second dc line.

The DC/AC converter units of the converter section modules are preferably interconnected in series so that they can operate in a cascade mode to achieve a smooth sinusoidal voltage waveform. In this arrangement each converter section module apart from the last converter section module in the series can have a second ac terminal that is connected to a first ac terminal of the next converter section module in the series. It will be readily appreciated that increasing the number of converter section modules in the converter phase module will result in a corresponding increase in the smoothness of the sinusoidal voltage waveform, but this will also increase the overall complexity of the converter arrangement.

The last converter section module in the series can have a second ac terminal that is connectable to a neutral line.

The converter phase module is physically compact, efficient and has the benefits that arise from the use of a modular topology. It can work for different voltage levels (e.g. 6.6 kV - 300 kV) and for different power ratings (e.g. 3 MW - 1000 MW). Most importantly, no line-frequency converter transformers or ac filters are required.

Each DC/DC converter unit preferably includes a transformer to provide galvanic isolation. The transformer can be a medium- or high-frequency transformer of single-phase or three-phase type, for example.

The DC/DC converter units may have any suitable topology. The topology of the DC/DC converters (and more particularly the DC/AC and AC/DC converter blocks) will depend on whether or not the converter phase module is intended to be bi-directional or uni-directional. It is generally preferred that each DC/DC converter unit includes a DC/AC converter block having ac terminals connected to a first transformer winding and a AC/DC converter block having ac terminals connected to a second transformer winding.

Typically all of the DC/DC converter units in the converter phase module will have the same topology so that the converter phase module benefits from being a modular system with regards to assembly, maintenance and repair. However, it would also be possible for the DC/DC converter units in the converter phase module to have different topologies. The same applies to the DC/AC converter units.

The integrated structure of each converter section module results in a very high power density making the converter phase module particularly suitable for high power applications such as HVAC power transmission for offshore wind turbine farms.

The first dc terminal of the first converter section module in the series can include (or be connected to) an off-load switch. The converter phase module has inherent overload/short circuit current protection capability arising from the turn-off of the gate-controlled semiconductor power devices employed in the DC/DC and DC/AC converter units. This means that off-load switches can be used to connect the converter phase module to the dc lines instead of full function dc circuit breakers.

The present invention further provides a converter arrangement for connecting a plurality of ac lines of a multi-phase ac network to a first dc line, the converter arrangement comprising a converter phase module as described above for each phase, each converter phase module being connectable between a respective one of the ac lines and the first dc line.

It will be fairly typical for the converter arrangement to be used with a three-phase ac network. In this case, the present invention further provides a converter arrangement for connecting three ac lines of a three-phase ac network to a first dc line, the converter arrangement comprising a first converter phase module as described above, a second converter phase module as described above, and a third converter phase module as described above. The first ac terminal of the first converter section module in the series of the first converter phase module is connectable to a first ac line, the first ac terminal of the first converter section module in the series of the second converter phase module is connectable to a second ac line, and the first ac terminal of the first converter section module in the series of the third converter phase module is connectable to a third ac line. For each converter phase module, each converter section module apart from the last converter section module in the series has a second ac terminal that is connected to a first ac terminal of the next converter section module in the series. For each converter phase module, the first dc terminal of the first converter section module in the series is connectable to the first dc line.

### Drawings

Figure 1A is a schematic diagram showing a converter arrangement according to the present invention where DC/DC converter units of each converter section module are interconnected in series;
Figure 1B is a schematic diagram showing a converter arrangement according to the present invention where DC/DC converter units of each converter section module are interconnected in parallel;
Figures 2A, 2B and 2C are schematic diagrams showing alternative topologies for each DC/DC converter unit of the converter arrangement for both bi-directional and uni-directional power flow;
Figures 3A and 3B are schematic diagrams showing alternative half-H bridge and full-H bridge topologies for each DC/AC converter unit of the converter arrangement;
Figures 4A and 4B show synthesised voltage waveforms;
Figure 5 is a schematic diagram showing how the DC/DC converter units of each converter section module are interconnected in series;
Figure 6 is a schematic diagram showing a topology for the DC/DC converter units of each converter phase module interconnected in series; and
Figure 7 is a schematic diagram showing how the DC/DC converter units of each converter section module are interconnected in parallel.

Although the following description is directed to converter arrangements that are suitable for use with high-voltage direct current (HVDC) power transmission, it will be readily understood that a similar converter arrangement can be used in other technical fields.

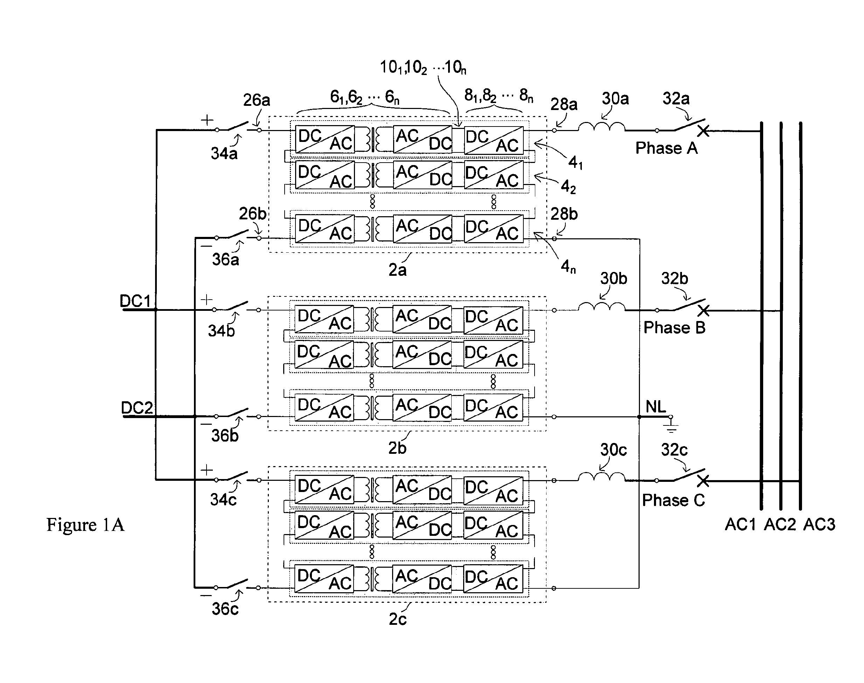

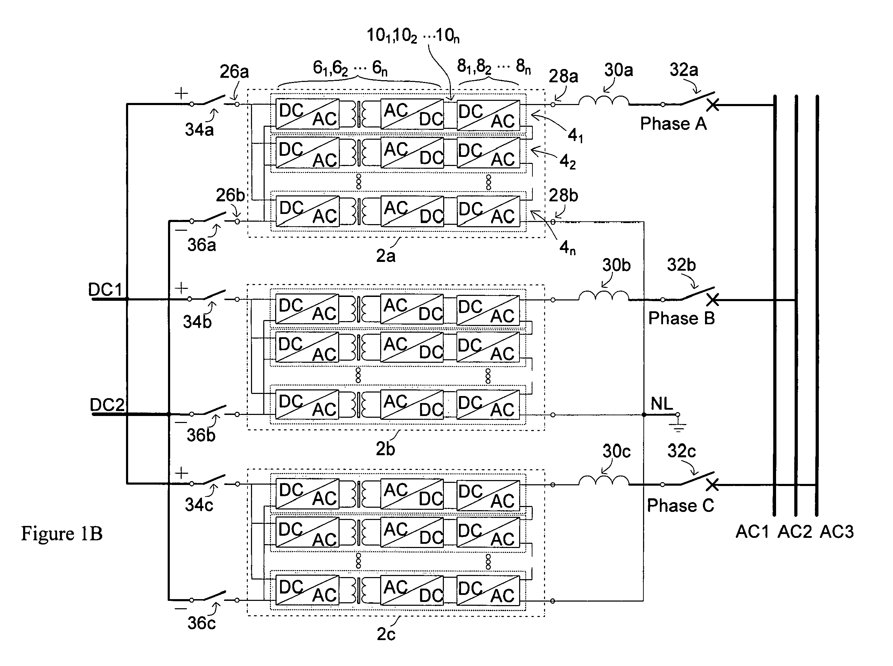

The converter arrangements shown in Figures 1A and 1B are used to connect two dc transmission lines DC1 and DC2 operating at a high dc voltage, for example, ±200 kV to three ac lines AC1, AC2 and AC3 of a three-phase ac network operating at 132-400 kV, 50/60 Hz. It will be appreciated that other voltages and frequencies are also possible and will depend on the transmission and network requirements.

For convenience, any reference herein to AC/DC and DC/AC converter units (or blocks) are for a direction of power flow from the dc transmission lines to the ac network. In other words, an AC/DC converter unit (or block) will convert an ac input to a dc output and a DC/AC converter unit (or block) will convert a dc input to an ac output for a direction of power flow from the dc transmission lines to the ac network. Since the converter arrangements are intended to be bi-directional they can also be used when the direction of power flow is from the ac network to the dc transmission lines. In this case an AC/DC converter unit (or block) will convert a dc input to an ac output and a DC/AC converter unit (or block) will convert an ac input to a dc output.

The converter arrangement includes three converter phase modules 2a, 2b and 2c. Each converter phase module 2a, 2b and 2c is connected to one of the ac lines AC1, AC2 and AC3 as described in more detail below. It will be readily appreciated that in other cases the ac network may have less than three phases or more than three phases and in this case the converter arrangement will have a corresponding number of converter phase modules (i.e. one per phase) with each converter phase module being connected to a respective one of the ac lines.

Each converter phase module 2a, 2b and 2c includes a series of n interconnected converter section modules. More particularly, the first converter phase module 2a includes a series of interconnected converter section modules 4₁, 4₂...4ₙ. The converter section module 4₁ is the first converter section module in the series and the converter section module 4ₙ is the last converter section module in the series. Any number of intermediate converter section modules may be provided but only one intermediate converter section module is shown in Figures 1A and 1B for clarity. Increasing the total number of converter section modules 4₁, 4₂...4ₙ will improve the output voltage waveform but will add further complexities to the overall design of the converter arrangement. For example, providing a total of nine converter section modules (i.e. n = 9) will allow each converter phase module to achieve nineteen levels of output voltage and virtually no voltage harmonics would be present. In practice the total number of converter section modules will depend on the total harmonic voltage distortion requirements, the power rating of the converter arrangement, the required voltage level etc.

Each of the converter section modules 4₁, 4₂...4ₙ includes a DC/DC converter unit 6 and a DC/AC converter unit 8. The DC/DC converter unit 6 of each converter section module 4₁, 4₂...4ₙ is connected to the dc side of the DC/AC converter unit 8 by means of a dc link 10. The dc link voltage in each converter section module can be controlled and regulated by the associated DC/DC converter 6 in accordance with the direction of power flow.

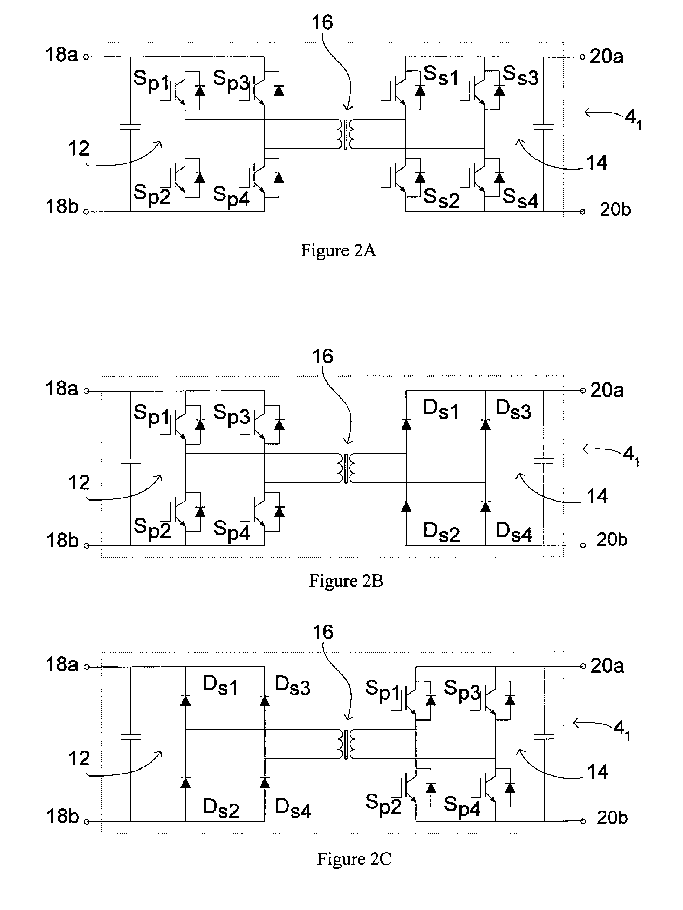

Each DC/DC converter unit 6 consists of a conventional full-H bridge DC/AC converter block 12 and a conventional full-H bridge AC/DC converter block 14 employing any suitable power semiconductor switching devices Sp1...Sp4. The DC/AC and AC/DC converter blocks 12 and 14 are provided on each side of a medium- or high-frequency transformer 16 which provides galvanic isolation. If the converter arrangement is intended to be bi-directional then both the DC/AC and AC/DC converter blocks 12 and 14 of each DC/DC converter unit 6 will typically be identical and can operate as an active rectifier or an active inverter depending on the direction of power flow. An example of a suitable topology for each DC/DC converter unit 6 for bi-directional power flow is shown in Figure 2A.

If the converter arrangement is intended to be uni-directional then one of the DC/AC and AC/DC converter blocks 12 and 14 can be replaced by a conventional diode bridge which operates as a passive rectifier. An example of a suitable topology for each DC/DC converter unit 6 for uni-directional power flow is shown in Figures 2B and 2C and will depend on the whether the direction of power flow is to or from the ac network.

Each DC/DC converter unit 6 can be a zero-voltage-switched (ZVS) converter or a resonant converter such as a parallel-resonant type, for example.

Each DC/DC converter unit 6 includes a first pair of dc terminals 18a and 18b and a second pair of dc terminals 20a and 20b.

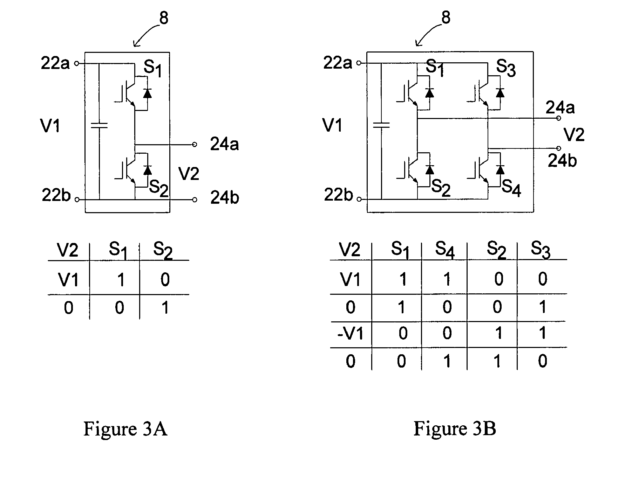

Each DC/AC converter unit 8 can be a conventional half-H bridge or full-H bridge converter block depending on the design requirements of the converter arrangement and may employ any suitable power semiconductor switching devices Sp1...Sp4. Examples of suitable half-H bridge and full-H bridge topologies for each DC/AC converter unit 8 are shown in Figures 3A and 3B, respectively.

Each DC/AC converter unit 8 includes a pair of dc terminal 22a and 22b and a pair of ac terminal 24a and 24b. The dc terminals 22a and 22b are connected to the second pair of dc terminals 20a and 20b of the associated DC/DC converter 6 by the dc link 10. The dc terminals and ac terminals of each individual converter section module 4₁, 4₂...4ₙ are therefore defined by the dc terminals 18a and 18b of the DC/DC converter 6 and by the ac terminals 24a and 24b of the DC/AC converter 8.

For the purposes of the following description it will be readily appreciated that the converter phase module 2a has a pair of dc terminals 26a and 26b and a pair of ac terminals 28a and 28b that allow the converter phase module to be connected to the dc transmission lines DC1, DC2 and the first ac line AC1 of the ac network and a neutral line NL, respectively. This is most clearly seen in Figures 1A and 1B where the contents of the dashed box defining the converter phase module 2a (i.e. the series of n interconnected converter section modules 4₁, 4₂...4ₙ) can be effectively ignored leaving just the dc and ac terminals.

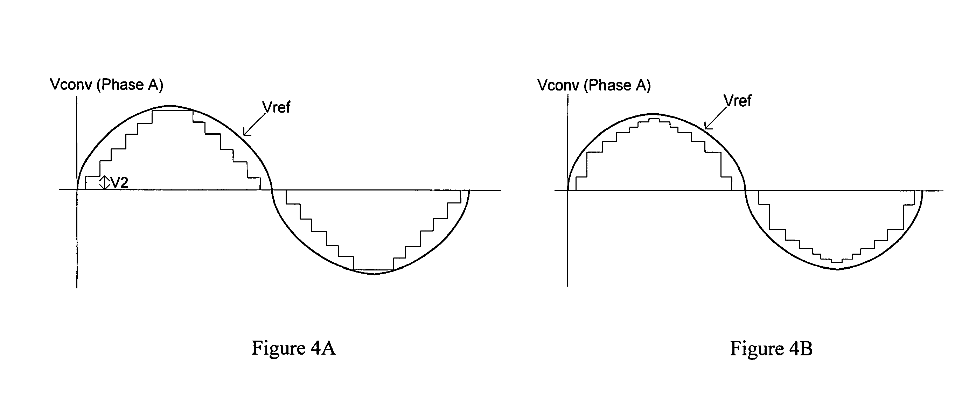

As described in more detail below, the DC/AC converter units 8 within each converter phase module are interconnected in series (or cascade) to provide a synthesised voltage waveform that can lead or lag the ac voltage to control active power transfer. The magnitude of the synthesised voltage waveform can be controlled by a suitable pulse width modulation (PWM) or pulse amplitude modulation (PAM) strategy to produce reactive power for VAR compensation and voltage control functions. The synthesised voltage waveform comprises a number of discrete voltage steps as shown in Figures 4A and 4B. More particular, Figure 4A shows a synthesised voltage waveform Vconv for phase A with equal voltage steps and Figure 4B shows a synthesised voltage waveform Vconv for phase A with variable voltage steps. Similar synthesised voltage waveforms for phases B and C would be provided by converter phase modules 2b and 2c, respectively. Each voltage step is implemented by the control of the relevant DC/AC converter unit 8 which has an independent dc input voltage that is regulated and controlled by the DC/DC converter unit 6 to which it is connected. Depending on the power flow direction, the reference voltage Vref is leading or lagging the ac voltage at the PCC point.

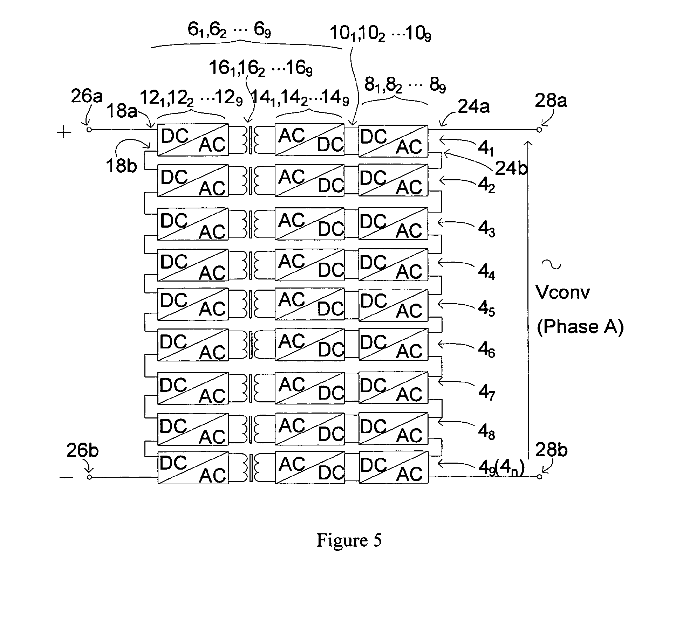

The interconnection of the converter section modules 4₁, 4₂...4ₙ of the first converter phase module 2a will now be described in more detail with reference to Figures 1A, 1B and 5 to 7.

The first ac terminal 24a of the first converter section module 4₁ defines the first ac terminal 28a of the first converter phase module 2a and is connected to the first ac line AC1 by means of a reactor 30a and protective switchgear 32a. The DC/AC converter units 8 of the first converter phase module 2a are interconnected in series (or cascade). With the exception of the DC/AC converter unit 8ₙ that forms part of the last converter section module 4ₙ, the second ac terminal 24b of each DC/AC converter unit 8 is interconnected in series to the first ac terminal 24a of the DC/AC converter unit that forms part of the next converter section module in the series. In other words, the second ac terminal 24b₁ of the DC/AC converter unit 8₁ that forms part of the first converter section module 4₁ in the series is connected to the first ac terminal 24a₂ of the DC/AC converter unit 8₂ that forms part of the second converter section module 4₂ in the series, the second ac terminal 24b₂ of the DC/AC converter unit 8₂ that forms part of the second converter section module 4₂ in the series is connected to the first ac terminal 24a₃ of the DC/AC converter unit 8₃ that forms part of the third converter section module 4₃ in the series and so on. The second ac terminal 24b₍ₙ₋₁₎ of the DC/AC converter unit 8₍ₙ₋₁₎ that forms part of the penultimate converter section module 4₍ₙ₋₁₎ in the series is connected to the first ac terminal 24aₙ of the DC/AC converter unit 8ₙ that forms part of the last converter section module 4ₙ in the series.

The second ac terminal 24bₙ of the DC/AC converter unit 8ₙ that forms part of the last converter section module 4ₙ in the series defines the second ac terminal 28b of the first converter phase section 2a and is connected to the neutral line NL.

The first dc terminal 18a₁ of the first converter section module 4₁ defines the first dc terminal 26a of the first converter phase module 2a and is connected to the first transmission line DC1 by means of an off-load switch 34a.

The DC/DC converter units 6 of the first converter phase module 2a can be interconnected in series or parallel.

For a series interconnection as shown in Figures 1A, 5 and 6 then, with the exception of the DC/DC converter unit 6ₙ that forms part of the last converter section module 4ₙ, the second dc terminal 18b of each DC/DC converter unit 6 is interconnected in series to the first dc terminal 18a of the DC/DC converter unit that forms part of the next converter section module in the series. In other words, the second dc terminal 18b₁ of the DC/DC converter unit 6₁ that forms part of the first converter section module 4₁ in the series is connected to the first dc terminal 18a₂ of the DC/DC converter unit 6₂ that forms part of the second converter section module 4₂ in the series, the second dc terminal 18b₂ of the DC/DC converter unit 6₂ that forms part of the second converter section module 4₂ in the series is connected to the first dc terminal 18a₃ of the DC/DC converter unit 6₃ that forms part of the third converter section module 4₃ in the series and so on. The second dc terminal 18b₍ₙ₋₁₎ of the DC/DC converter unit 6₍ₙ₋₁₎ that forms part of the penultimate converter section module 4₍ₙ₋₁₎ in the series is connected to the first ac terminal 18aₙ of the DC/DC converter unit 6ₙ that forms part of the last converter section module 4ₙ in the series.

The second dc terminal 18bₙ of the DC/DC converter unit 6ₙ that forms part of the last converter section module 4ₙ in the series defines the second dc terminal 26b of the first converter phase module 2a and is connected to the second dc transmission line DC2 by means of an off-load switch 36a.

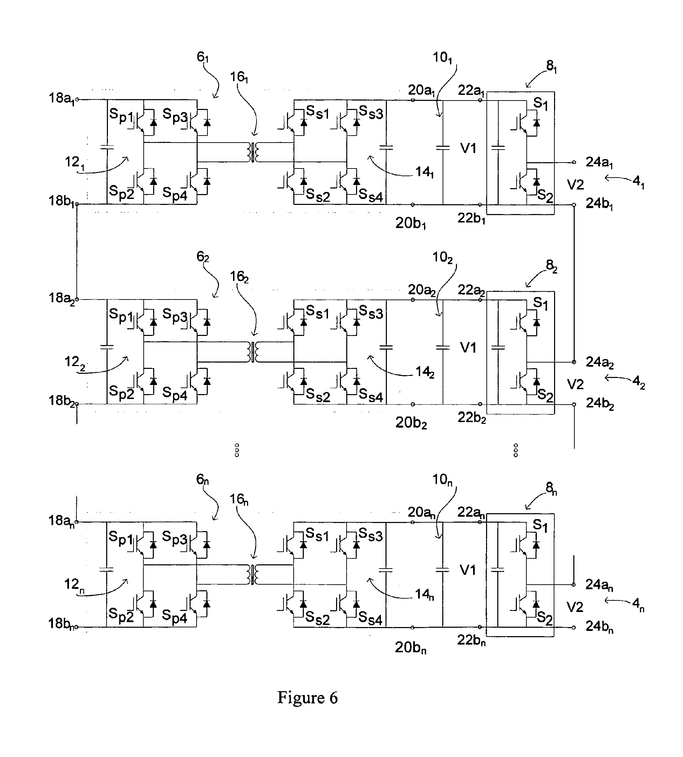

Figure 6 shows the topology of the series interconnection in more detail. Although the DC/AC converter units 8₁, 8₂...8ₙ are shown to have a half-H bridge topology it will be readily appreciated that they can also have the full-H bridge topology shown in Figure 3B. Similarly, if the converter arrangement is intended to be uni-directional then the DC/AC and DC/AC converter blocks of the DC/DC converter units 6₁, 6₂...6ₙ can have a rectifier bridge topology shown in Figures 2B and 2C depending on the whether the direct of power flow is to or from the ac network.

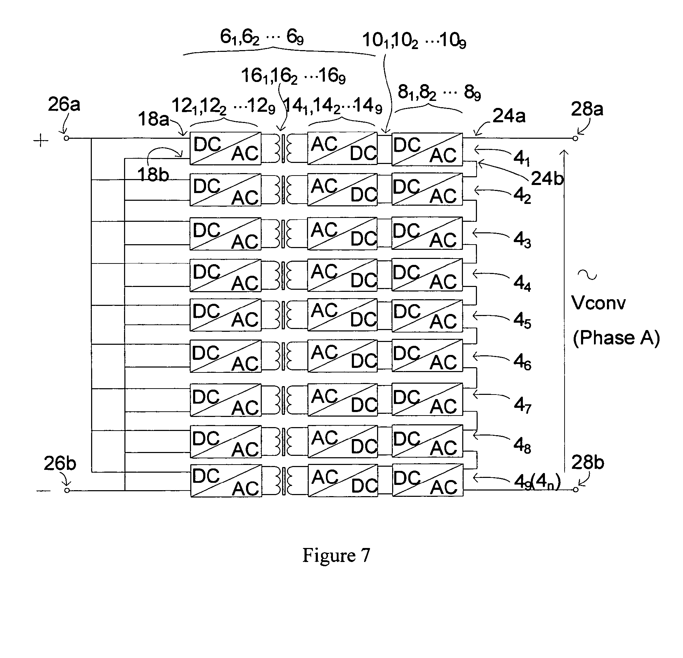

For a parallel interconnection as shown in Figure 1B and 7 then the first dc terminals 18a₁, 18a₂...18aₙ of the DC/DC converter units 6₁, 6₂...6ₙ are connected in parallel to define the first dc terminal 26a for the first converter phase module 2a. The second dc terminals 18b₁, 18b₂...18bₙ of the DC/DC converter units 6₁, 6₂...6ₙ are connected in parallel to define the second dc terminal 26b for the first converter phase module 2a. The first dc terminal 26a of the first converter phase module 2a is connected to the first dc transmission line DC1 by means of the off-load switch 34a and the second dc terminal 26b of the first converter phase module is connected to the second dc transmission line DC2 by means of the off-load switch 36a.

The second and third converter phase modules 2b and 2c are formed in an identical manner to the first converter phase module 2a described above. The first ac terminal of the second converter phase module 2b is connected to the second ac line AC2 by means of a reactor 30b and protective switchgear 32b and the first ac terminal of the third converter phase module 2c is connected to the third ac line AC3 by means of a reactor 30c and protective switchgear 32c. The first dc terminals of the second and third converter phase modules 2b and 2c are connected to the first dc transmission line DC1 by means of off-load switches 34b and 34c and the second dc terminals of the second and third converter phase modules are connected to the second dc transmission line DC2 by means of off-load switches 36b and 36c.

For a bi-directional converter arrangement then dc power provided through the dc transmission lines DC1 and DC2 can be converted to ac power by the converter arrangement and supplied to the ac network or *vice versa.*

If the converter arrangement is to be used for HVDC power transmission then a first converter arrangement can be located in a converter station at each end of the dc transmission lines or cables.

## Claims

1. A converter phase module (2a) for connecting an ac line (AC1) of an ac network to a first dc line (DC1), the converter phase module (2a) comprising a series of interconnected converter section modules (4₁, 4₂...4ₙ), each converter section module including an DC/DC converter unit (6₁, 6₂...6ₙ) and a DC/AC converter unit (8₁, 8₂...8ₙ) connected to the DC/DC converter unit by a dc link (10₁, 10₂...10ₙ);
wherein a first converter section module (4₁) in the series has a first ac terminal (24a₁) connectable to the ac line (AC1), a second ac terminal (24b₁) that is connected to a first ac terminal (24a₂) of the next converter section module (4₂) in the series, and a first dc terminal (18a₁) connectable to the first dc line (DC1).

2. A converter phase module according to claim 1, wherein each converter section module (4₁, 4₂...4₍ₙ₋₁₎) apart from the last converter section module (4ₙ) in the series has a second dc terminal (18b) that is connected to a first dc terminal (18a) of the next converter section module in the series; and
wherein the last converter section module (4ₙ) in the series has a second dc terminal (18b) that is connectable to a second dc line (DC2).

3. A converter phase module according to claim 1, wherein each converter section module (4₁, 4₂...4ₙ) has a first dc voltage terminal (18a) that is connectable to the first dc line (DC1) and a second dc voltage terminal (18b) that is connectable to a second dc line (DC2).

4. A converter phase module according to any preceding claim, wherein each converter section module (4₁, 4₂...4₍ₙ₋₁₎) apart from the last converter section module (4ₙ) in the series has a second ac terminal (24b) that is connected to a first ac terminal (24a) of the next converter section module in the series.

5. A converter phase module according to claim 4, wherein the last converter section module (4ₙ) in the series has a second ac terminal (24b) that is connectable to a neutral line (NL).

6. A converter phase module according to any preceding claim, wherein each DC/DC converter unit (6) includes a transformer (16).

7. A converter phase module according to claim 6, wherein each DC/DC converter unit (6) includes a DC/AC converter block (12) having ac terminals connected to a first transformer winding and an AC/DC converter block (14) having ac terminals connected to a second transformer winding.

8. A converter phase module according to any preceding claim, wherein the first dc terminal (18a) of the first converter section module (4₁) in the series includes an off-load switch (34a).

9. A converter arrangement for connecting a plurality of ac lines (AC1, AC2 and AC3) of a multi-phase ac network to a first dc line (DC1), the converter arrangement comprising a converter phase module (2a, 2b and 2c) according to any preceding claim for each phase, each converter phase module (2a, 2b and 2c) being connectable between a respective one of the ac lines (AC1, AC2 and AC3) and the first dc line (DC1).

10. A converter arrangement according to claim 9, wherein, for each converter phase module (2a, 2b and 2c), a first converter section module (4₁) in the series has a first ac terminal (24a) connectable to a respective one of the ac lines (AC1, AC2 and AC3), a second ac terminal (24b) that is connectable to a first ac terminal (24a) of the next converter section module in the series, and a first dc terminal (18a) connectable to the first dc line (DC1).

11. A converter arrangement according to claim 9 or claim 10, wherein for each converter phase module (2a, 2b and 2c), a last converter section module (4ₙ) in the series has a second dc terminal (18b) connectable to a second dc line (DC2).

12. A converter arrangement for connecting three ac lines (AC1, AC2 and AC3) of a three-phase ac network to a first dc line (DC1), the converter arrangement comprising a first converter phase module (2a) according to any of claims 1 to 8, a second converter phase module (2b) according to any of claims 1 to 8, and a third converter phase module (2c) according to any of claims 1 to 8;
wherein the first ac terminal (24a) of the first converter section module (4₁) in the series of the first converter phase module (2a) is connectable to a first ac line (AC1), the first ac terminal of the first converter section module in the series of the second converter phase module (2b) is connectable to a second ac line (AC2), and the first ac terminal of the first converter section module in the series of the third converter phase module (2c) is connectable to a third ac line (AC3);
for each converter phase module (2a, 2b and 2c), each converter section module (4₁, 4₂...4₍ₙ₋₁₎) apart from the last converter section module (4ₙ) in the series has a second ac terminal (24b) that is connected to a first ac terminal (24a) of the next converter section module in the series; and
for each converter phase module (2a, 2b and 2c), the first dc terminal (18a) of the first converter section module (4₁) in the series is connectable to the first dc line (DC1).

13. A converter arrangement according to claim 12, wherein, for each converter phase module (2a, 2b and 2c), each converter section module (4₁, 4₂...4₍ₙ₋₁₎) apart from the last converter section module (4ₙ) in the series has a second dc terminal (18b) that is connected is connected to a first dc terminal (18a) of the next converter section module in the series; and
wherein, for each converter phase module (2a, 2b and 2c), the last converter section module (4ₙ) in the series has a second dc terminal (18b) that is connectable to a second dc line (DC2).

14. A converter arrangement according to claim 12, wherein, for each converter phase module (2a, 2b and 2c), each converter section module (4₁, 4₂...4ₙ) has a first dc voltage terminal (18a) that is connectable to the first dc line (DC 1) and a second dc voltage terminal (18b) that is connectable to a second dc line (DC2).

15. A converter arrangement according to any of claims 12 to 14, wherein, for each converter phase module (2a, 2b and 2c), the last converter section module (4ₙ) in the series has a second ac terminal (24b) that is connectable to a neutral line (NL).
